# EUROPÄISCHE PATENTANMELDUNG

(11) **EP 4 687 359 A1**
(43) Veröffentlichungstag der Anmeldung: **04.02.2026**
(21) Anmeldenummer: 25192520.2
(22) Anmeldetag: 29.07.2025
(51) Int. Cl.: H04W 12/041, H04W 12/06, H04W 12/30, H04W 12/71, H04W 12/72

(54) **VERFAHREN ZUM EINRICHTEN EINES BENUTZERGERÄTES, EINRICHTUNGSPROGRAMM, COMPUTERLESBARER DATENTRÄGER, BENUTZERGERÄT UND EINRICHTUNGSANORDNUNG DAFÜR**

(30) Priorität: 31.07.2024 DE 102024121784
(71) Anmelder: Giesecke+Devrient Mobile Security Germany GmbH, 81677 München (DE)
(72) Erfinder: Huber, Ulrich, 81677 München (DE); Schnellinger, Michael, 81677 München (DE)
(74) Vertreter: LKGLOBAL Partnerschaftsgesellschaft mbB

(57) **Zusammenfassung**

Ein Verfahren, Einrichtungsprogramm (10), Computerlesbarer Datenträger (11), Benutzergerät (5) und eine Einrichtungsanordnung (1) zum Einrichten eines Benutzergerätes (5), beispielsweise eines mobilen Benutzergerätes (5) zur Teilnahme in einem Telekommunikationsnetzwerk, werden vorgeschlagen, mit einem sicheren Element (6), insbesondere einer eUICC, das dazu ausgestaltet ist, wenigstens einen Profildatensatz (P) für einen sicheren Betrieb des Benutzergerätes (5) zu verwalten, und wobei folgende Schritte ausgeführt werden: Bereitstellen eines Elementenidentifikators (I) zum Identifizieren des sicheren Elements (6); Bereitstellen einer Ortskennung (W) für ein Heimatsortsregister (R) eines Telekommunikationsnetzwerks; und Ableiten wenigstens einer Anmeldeinformation (H) zum Anmelden des Benutzergerätes (5) aus dem Elementenidentifikator (I) und der Ortskennung (W) und/oder einem der Ortskennung (W) zugeordneten Ortsbetreiberschlüssel (E).

## Beschreibung

### Gebiet der Erfindung

Die vorliegende Offenlegung bezieht sich auf den Bereich der Bereitstellung von Daten für sichere Elemente, wie eingebettete Universal Integrated Circuit Cards (eUICCs), die Benutzerprofile zur Autorisierung einer Benutzung von Benutzergeräten, z. B. von Netzwerkgeräten in Form von Mobiltelefonen oder ähnlichem, beinhalten. Insbesondere betrifft die Erfindung ein Verfahren zum Einrichten eines Benutzergerätes, beispielsweise eines mobilen Benutzergerätes zur Teilnahme in einem Telekommunikationsnetzwerk, mit einem sicheren Element, insbesondere einer eUICC, das dazu ausgestaltet ist, wenigstens einen Profildatensatz für einen sicheren Betrieb des Benutzergerätes zu verwalten, ein Einrichtungsprogramm, einen computerlesbaren Datenträger, ein Benutzergerät, insbesondere mobiles Endgerät zur Teilnahme in einem Kommunikationsnetzwerk, und eine Einrichtungsanordnung zum Einrichten von Benutzergeräten.

### Hintergrund der Erfindung

Verfahren zum Handhaben von eingebetteten sicheren Elementen, wie eUICCs, sowie Computerprogramme, computerlesbaren Datenträger, Benutzergeräte zur Teilnahme in Kommunikationsnetzwerken und Kommunikationsnetzwerke sind aus dem Stand der Technik bekannt. So werden auf eUICCs, beispielsweise auf mobilen Benutzergeräten, wie Mobiltelefonen, Smartphones, Tablets, oder ähnlichem, jeweilige Identifikationsmerkmale von Benutzern der Benutzergeräte verwaltet. Auf einer eUICC geschieht dies in der Regel in Form von entsprechenden eingebetteten Teilnehmer-Identitätsmodulen (*embedded Subscriber Identity Module -* eSIM). Diese Vorgehensweise ist notwendig, um zur Verwaltung der Identifikationsmerkmale notwendige Sicherheitsanforderungen zu erfüllen. Dazu ist eine vertrauenswürdige Instanz (*trusted party*) notwendig, die auf eUICCs und/oder Servern bereitgestellt werden kann, wie z.B. eSIM-Download-Servern, von denen als vertrauenswürdige Vertragsverwaltungsdatenbereitstellungsplattformen *(Subscription Manager Data Preparation platform -* SM-DP+) unter Erfüllung jeweiliger Sicherheitsanforderungen eUICC-Datensätze bezogen bzw. verwaltet werden können.

Sichere Elemente verfügen in der Regel über eine Systemstruktur mit einem Betriebssystem, damit sie mit Gerätebaugruppen von Endgeräten interagieren können, auf denen sie implementiert sind. Über das Betriebssystem kann auf Speicherbereiche, meist nicht flüchtige Speicher, sicherer Elemente zugegriffen und darin abgelegte Informationen, wie Identifikationsmerkmale, können gehandhabt, verwaltet und abgefragt werden. Beispielsweise geschieht dies mithilfe von Datenelementen entsprechender Anwendungsprotokolle (*Application Protocoll Data Unit - APDU*), welche über eine Anschlussschnittstelle unidirektional Befehle an sichere Elemente übertragen, die dann von diesen ausgeführt werden.

DE 10 2021 001 850 A, beispielsweise, betrifft ein Verfahren zum Personalisieren eines Secure Elements mit den folgenden Verfahrensschritten: Empfangen, in einem Datenerzeuger, einer Anfrage für ein Bündel von Speicherabbildern für eine Vielzahl von Secure Elementen, wobei jedes angefragte Speicherabbild des empfangenen Bündels ein Secure Element der Vielzahl von Secure Elementen betrifft und wobei jeweils ein Secure Element der Vielzahl von Secure Elementen in einem entsprechenden Endgerät einer Vielzahl von Endgeräten fest verbaut wird oder ist; Erhalten, im Datenerzeuger, von zumindest einem Subskriptionsdatensatz für zumindest ein zu personalisierendes Secure Element der Vielzahl von Secure Elementen, wobei der Subskriptionsdatensatz von einem Subskriptionsverwaltungsserver erhalten wird; Bereitstellen, durch den Datenerzeuger, eines Betriebssystems oder eines Teils des Betriebssystems für das zu personalisierende Secure Element; Erzeugen, durch den Datenerzeuger, eines Speicherabbilds für jedes der Secure Elemente gemäß der empfangenen Anfrage, wobei das Speicherabbild des zu personalisierenden Secure Elements das bereitgestellte Betriebssystem oder den Teil des Betriebssystems und zusätzlich den erhaltenen zumindest einen Subskriptionsdatensatz umfasst; und Bündeln der erzeugten Speicherabbilder und Bereitstellen der gebündelten Speicherabbilder als Speicherabbilder-Bündel vom Datenerzeuger zur Fertigstellung der Endgeräte unter Einbringen zumindest des Speicherabbilds des zu personalisierenden Secure Elements in das Secure Element zum Personalisieren des Secure Elements.

US 10 277 587 B2 beschreibt Verfahren zum Instanziieren mehrerer elektronischer Teilnehmeridentitätsmodule (eSIMs) auf einer elektronischen universellen integrierten Schaltkreiskarte (eUICC) unter Verwendung eines vom Hersteller installierten großen Daten-Binärobjekts (Data Blob). Ein eSIM-Paket einschließlich des Datenblobs in verschlüsselter Form wird in einer Fertigungsumgebung sicher im eUICC installiert. Ein mit dem eSIM-Paket verknüpfter Schlüsselverschlüsselungsschlüssel (KEK) wird der Fabrik eines Originalgeräteherstellers (OEM) für drahtlose Geräte separat zur Verfügung gestellt. Die OEM-Fabrik für drahtlose Geräte stellt den KEK dem eUICC innerhalb eines bestimmten drahtlosen Geräts zur Verfügung. Die eUICC verwendet den KEK, um das eSIM-Paket zu entschlüsseln und den Datenblob bereitzustellen. Die eUICC kann eine Anfrage zum Instanziieren einer ersten eSIM empfangen. Die eUICC kann die erste eSIM mithilfe von Daten aus dem Datenblob instanziieren. Ein Benutzer kann dann über das drahtlose Gerät auf Netzwerkdienste zugreifen. Anschließend kann mithilfe des Datenblobs eine zweite eSIM durch die eUICC instanziiert werden.

EP 2 533 485 B1 betrifft Verfahren und Vorrichtungen in einem Mobilkommunikationssystem für das Over-the-Air-Management von Mobilstationen, die ein sicheres Identifikationselement, vorzugsweise ein Teilnehmeridentitätsmodul, enthalten. Basierend auf einem standardmäßigen Challenge-Response-Authentifizierungsverfahren, das in einem Mobilkommunikationssystem implementiert ist, nicht für den vorgesehenen Authentifizierungszweck zu verwenden, sondern für die Versorgung einer Mobilstation mit Abonnement- und/oder Anweisungsdaten. Das standardmäßige Challenge-Response-Authentifizierungsverfahren wird dahingehend modifiziert, dass die Challenge als Träger für Abonnement- und/oder Instruktionsdaten verwendet wird. Diese Abfrage, die die Abonnement- und/oder Anweisungsdaten enthält, wird der Mobilstation als Antwort auf eine Anfrage der Mobilstation, Zugang oder Verbindung zum Mobilkommunikationssystem zu erhalten, zur Verfügung gestellt und enthält ein Spezial-Modus-Indikator-Datenelement, das dem Mobilkommunikationssystem anzeigt, dass die Mobilstation Abonnement- und/oder Anweisungsdaten anfordert, und wird daher in geeigneter Weise an eine Datenbereitstellungseinheit weitergeleitet, die für die Bereitstellung von Abonnement- und/oder Anweisungsdaten konfiguriert ist.

Aus dem Stand der Technik bekannte Verfahren und Systeme zur Bereitstellung und Aktualisierung sicherer Elemente von Benutzergeräten, einschließlich Betriebssystem-Updates, erfüllen möglicherweise nicht alle Anforderungen in Bezug auf die Einsatzfähigkeit und Verfügbarkeit einerseits und die funktionale Sicherheit und Sicherung andererseits. So ist es beispielsweise wünschenswert, dass sowohl das Betriebssystem als auch die sicheren Elemente denselben Ursprung und vorzugsweise denselben Entwicklungsstand haben, um die funktionale Sicherheit und die Sicherheit zu gewährleisten. Aufgrund von Einschränkungen bei der Einsatzfähigkeit und Verfügbarkeit kann jedoch nicht immer gewährleistet werden, dass das Betriebssystem und die sicheren Elemente denselben Ursprung und die entsprechenden Versionen haben oder bestimmte künftige Anforderungen erfüllen, insbesondere wenn erwartet wird, dass während der Lebensdauer des Benutzergeräts und/oder des jeweiligen sicheren Elements eine neue Spezifikation oder ein neuer Standard für den Betrieb der Benutzergeräte eingeführt wird.

Dies kann die Funktionalität, insbesondere ein Spektrum von (zukünftigen) Fähigkeiten, des Benutzergeräts einschränken, die funktionale Sicherheit und die Sicherheit beim Betrieb von Benutzergeräten beeinträchtigen oder sogar dazu führen, dass die Geräte nicht richtig konfiguriert werden können, wobei zu berücksichtigen ist, dass nicht nur das Betriebssystem, sondern auch die zugehörigen Datenstrukturen von Aktualisierungsverfahren betroffen sein können. Um das Funktionsspektrum der Benutzergeräte sowie ihrer auf den neuesten Stand zu bringen sowie einen entsprechenden Entwicklungsstand zu gewährleisten, ist es wünschenswert, sowohl das Betriebssystem als auch die Datenstrukturen möglichst kurz vor Auslieferung an einen Benutzer auf die sicheren Elemente zu laden. Hierbei sollten die Datenstrukturen gleichzeitig Herstellung einer Konnektivität mit einem Netzwerkbetreiber eines Telekommunikationsnetzwerkes ermöglichen und somit möglichst unmittelbar nach Auslieferung eine Konnektivität ermöglichen, um über Telekommunikationsnetzwerke, u.U. auch private Netzwerke, weitere Daten, wie Steuerungsdaten für die Benutzergeräte, abrufen zu können. Allerdings ist der Netzwerkbetreiber womöglich noch nicht bekannt, wenn das Benutzergerät samt sicherem Element an einen Benutzer oder sicheres Element an einen Hersteller von Benutzergeräten ausgeliefert werden soll, wofür der bekannte Stand der Technik noch keine zufriedenstellende Lösung aufbieten kann.

### Beschreibung

Es ist also eine Aufgabe der vorliegenden Erfindung, eine möglichst zeitnahe Bereitstellung von Benutzergeräten und/oder sicheren Elementen kurz vor ihrer Auslieferung an einen Benutzer bzw. Hersteller von Benutzergeräten zu ermöglichen. Insbesondere kann es als Ziel angesehen werden, einen Weg bereitzustellen, um sichere Elemente und ihr Betriebssysteme sowie Datenstrukturen so zu handhaben, dass ein zukunftssicheres Funktionsspektrum, Sicherheit und Schutz gewährleistet werden können, ohne dabei die Einsatzfähigkeit, Verfügbarkeit und/oder Datenintegrität, insbesondere Kommunikationsfähigkeit der Benutzergeräte bzw. ihrer sicheren Elemente zu beeinträchtigen.

Diese Aufgabe wird durch den Gegenstand der unabhängigen Ansprüche gelöst. Beispielhafte Ausführungsformen ergeben sich aus den abhängigen Ansprüchen und der nachfolgenden Beschreibung. Hierin in Bezug auf Verfahren beschriebenen Merkmale sowie entsprechende Verfahrensschritte können als Vorrichtungsmerkmale implementiert werden oder umgekehrt. Im Zusammenhang mit dem Verfahren stehende Abschnitte der Beschreibung gelten also in analoger Weise auch für Computerprogramme, computerlesbare Datenträger, Benutzergeräte zur Teilnahme in Kommunikationsnetzwerken und Kommunikationsnetzwerke. Insbesondere können Verfahrensschritte und damit zusammenhängend erwähnte Komponenten als Funktionen der Computer- bzw. Einrichtungsprogramme, computerlesbaren Datenträger, Benutzergeräte zur Teilnahme in Kommunikationsnetzwerken und Kommunikationsnetzwerke implementiert sein und beliebige Funktionen der Einrichtungs- bzw. Computerprogramme, computerlesbaren Datenträger, Benutzergeräte sowie Einrichtungsanordnungen zum Einrichten der Benutzergeräte zur Teilnahme in Kommunikationsnetzwerken und Kommunikationsnetzwerke können als Verfahrensschritte implementiert werden.

Verfahren zum Einrichten eines Benutzergerätes, beispielsweise eines mobilen Benutzergerätes zur Teilnahme in einem Telekommunikationsnetzwerk, mit einem sicheren Element, insbesondere einer eUICC, das dazu ausgestaltet ist, wenigstens einen Profildatensatz für einen sicheren Betrieb des Benutzergerätes zu verwalten, umfassend folgende Schritte:
- Bereitstellen eines Elementenidentifikators zum Identifizieren des sicheren Elements;
- Bereitstellen einer Ortskennung für ein Heimatsortsregister eines Telekommunikationsnetzwerks; und
- Ableiten wenigstens einer Anmeldeinformation zum Anmelden des Benutzergerätes aus dem Elementenidentifikator und der Ortskennung und/oder einem der Ortskennung zugeordneten Ortsbetreiberschlüssel.

Einrichtungsprogramm, mit Befehlen, die bei der Ausführung des Einrichtungsprogramms durch ein Benutzergerät dieses dazu veranlassen, ein entsprechendes Verfahren auszuführen.

Computerlesbarer Datenträger mit einem darauf gespeicherten entsprechenden Einrichtungsprogramm nach Anspruch.

Benutzergerät, insbesondere mobiles Endgerät zur Teilnahme in einem Kommunikationsnetzwerk, mit einem entsprechenden Einrichtungsprogramm nach, einem computerlesbaren Datenträger und/oder zur Ausführung eines entsprechenden Verfahrens eingerichtet.

Einrichtungsanordnung zum Einrichten von Benutzergeräten, mit einem darin gespeicherten entsprechenden Einrichtungsprogramm, einem entsprechenden computerlesbaren Datenträger und/oder zur Ausführung eines entsprechenden Verfahrens.

Das Verfahren kann also entsprechend von einer Datenverarbeitungseinrichtung bzw. mit Hilfe eines Computers ausgeführt werden, die bzw. der als Benutzergerät oder Server implementiert sein kann. Ein Einrichtungs- bzw. Computerprogramm kann Befehle umfassen, die bei der Ausführung des Programms durch eine Datenverarbeitungseinrichtung bzw. einen Computer diese bzw. diesen veranlassen, das Verfahren auszuführen. Ein computerlesbares Speichermedium, ein computerlesbarer Datenträger und/oder ein Datenträgersignal können das Einrichtungs- bzw. Computerprogramm speichern bzw. übertragen. Ein entsprechender computerlesbarer Datenträger kann als computerlesbares Medium und/oder Datenträgersignal vorliegen.

Beim Elementenidentifikator kann es sich um einen einzigartigen elektronischen Identifikator (*eUICC Identifier -* eID) zum Identifizieren des sicheren Elementes handeln. Bei der Ortskennung kann es sich um eine ortsabhängige Kennung, insbesondere eine Länderkennung, wie beispielsweise einen mobilen Ländercode (*mobile country code -* MCC) und/oder mobilen Netzwerkcode (*mobile network code -* MNC), handeln. Der Ortsbetreiberschlüssel kann der Ortskennung zugeordnet sein.

Das Einrichtungs- bzw. Computerprogramm kann als Anwendungsprogramm für ein Benutzergerät und/oder einen Server bereitgestellt werden, beispielsweise für und/oder als Teil eines Heimatortregisters (*Home Location Register -* HLR). Die Einrichtungsanordnung kann die Rechen- bzw. Servervorrichtung zum Einrichten von Benutzergeräten umfassen. Beispielsweise kann die Servervorrichtung ein Heimatortregister umfassen.

Die erfindungsgemäße Lösung hat den Vorteil, dass die Anmeldeinformationen zum Anmelden des Benutzergerätes bzw. des sicheren Elementes bei einem Telekommunikationsnetzwerk eines jeweiligen Netzwerkbetreibers nach Bekanntwerden der Ortskennung bzw. des Ortsbetreiberschlüssels erzeugt bzw. für das sichere Element bereitgestellt werden können. Die Anmeldeinformationen lassen sich bei einem Hersteller und/oder Abnehmer von Benutzergeräten erzeugen, nachdem das sichere Element an den Hersteller bzw. Abnehmer ausgeliefert wurde. Der Abnehmer kann das Benutzergerät dann relativ zeitnah nach der Bereitstellung der Anmeldeinformationen an Benutzer ausliefern, dem wiederum umgehend eine Konnektivität zu einem Telekommunikationsnetzwerk mit dem Benutzergerät bzw. dem sicheren Element zur Verfügung steht, sodass weitere Daten, wie Steuerdaten, über das Telekommunikationsnetzwerk bezogen werden können.

Auf diesem Wege kann ein Bereitstellungs- und/oder Einrichtungszeitraum zwischen einer Vergabe der Anmeldeinformationen und der Auslieferung bzw. Konnektivitätsfähigkeit des Benutzergeräts und/oder sicheren Elements möglichst kurz gehalten werden. Damit lassen sich auch sämtliche weitere Datenbestandteile auf dem sicheren Element bzw. für dieses und/oder das Benutzergerät, wie beispielsweise Betriebssystem- und/oder Steuerungsdatensätze, Geräte-Firmware, o.ä., zu einem relativ späten Zeitpunkt und daher mit möglichst hoher Aktualität bereitstellen. Dies hilft, Einsatzfähigkeit, Verfügbarkeit und/oder Datenintegrität, insbesondere Kommunikationsfähigkeit der Benutzergeräte bzw. ihrer sicheren Elemente zu verbessern sowie zu vereinfachen.

Die Lösung ist nicht auf eUICCs beschränkt, sondern eignet sich allgemein für sogenannte sichere Elemente (SEs) bzw. manipulationsgeschützte Elemente (*tamper-resistant element -* TRE), die hierin beispielsweise als integrierte Schaltkreiskarte bezeichnet sind. Als solche umfassen sichere Elemente neben eUICCs beispielsweise klassische UICCs, integrated UICC (iUICCs) sowie sämtliche integrierten sicheren Elemente anderer Bauart, wie z.B. integrated Secure Elements (iSE/eSE), Smart Cards, Teilnehmeridentitätsmodule, Subscriber Identity Module (SIMs) und/oder virtuelle SIM (vSIM). Gemeinsam ist allen derartigen sicheren Elementen, dass darauf Nutzerdatensätze bzw. eUICC-Datensätze beispielsweise als Telekommunikationsprofile oder kurz "Profile" abgelegt werden können, mit deren Hilfe Benutzer sich gegenüber Kommunikationsnetzwerken, wie beispielsweise als Teilnehmer in Telekommunikationsnetzen authentisieren können. Die sicheren Elemente zeichnen sich jeweils dadurch aus, dass die darauf abgelegte Information, also insbesondere die Profile, gegen Angriffe Dritter besonders geschützt und weder physisch noch softwaretechnisch leicht manipulierbar ist.

Gemäß einer Ausführungsform kann vorgesehen sein, dass die wenigstens eine Anmeldeinformation einen Profilidentifikator und/oder einen Sicherheitsschlüssel umfasst. Beim Profilidentifikator kann es sich um eine einzigartige Teilnehmernummer bzw. internationale Teilnehmeridentität (*International Mobile Subscriber Identity -* IMSI) handeln. Beim Sicherheitsschlüssel kann es sich um einen einzigartigen Sicherheitsschlüssel und/oder Schlüssel für den Austausch von Datenkommandos bzw. Datenelementen des Anwendungsprotokolls handeln. Somit kann der Profilidentifikator und/oder Sicherheitsschlüssel zu einem relativ späten Zeitpunkt bereitgestellt werden, was dabei hilft, Einsatzfähigkeit, Verfügbarkeit und/oder Datenintegrität, insbesondere Kommunikationsfähigkeit der Benutzergeräte bzw. ihrer sicheren Elemente zu verbessern sowie zu vereinfachen.

Gemäß einer Ausführungsform kann vorgesehen sein, dass der Elementenidentifikator und/oder der Ortsbetreiberschlüssel von einer sicheren Instanz bezogen werden bzw. wird. Bei der sicheren Instanz (*Trusted Entity*) kann es sich um eine Instanz mit entsprechender Sicherheitszertifizierung handeln. Dies hilft, ein erforderliches Maß an Sicherheit bei der Bereitstellung von Elementenidentifikator und/oder aus Ortsbetreiberschlüssel zu gewährleisten.

Gemäß einer Ausführungsform kann vorgesehen sein, dass der Ortsbetreiberschlüssel von einem Hauptschlüssel abgeleitet wird. Die sichere Instanz kann den Ortsbetreiberschlüssel bzw. eine Reihe von Ortsbetreiberschlüsseln vom Hauptschlüssel bzw. einem Hauptbetreiberschlüssel ableiten. Die Schlüssel können in einem Hardwaresicherheitsmodul von der sicheren Instanz verwaltet werden. Beispielsweise können die Ortsbetreiberschlüssel für eine jeweilige Ortskennung bzw. Netzwerkkennung individuell erzeugt werden. Dies hilft weiterhin, ein erforderliches Maß an Sicherheit und/oder Integrität bei der Bereitstellung von Ortsbetreiberschlüsseln zu gewährleisten.

Gemäß einer Ausführungsform kann vorgesehen sein, dass es des Weiteren einen Schritt des Erkennens eines Standortes des sicheren Elements für die Bereitstellung des der Ortskennung und/oder des Ortsbetreiberschlüssels umfasst. Beispielsweise kann das sichere Element seinen Standort beim erstmaligen Einschalten selbst erkennen. Alternativ oder zusätzlich kann eine Recheneinrichtung wie ein Server zur Einrichtung des sicheren Elementes bzw. Benutzergerätes den Standort erkennen, zuweisen bzw. dem sicheren Element mitteilen. Dies kann zusätzlich dabei helfen, Einsatzfähigkeit, Verfügbarkeit und/oder Datenintegrität, insbesondere Kommunikationsfähigkeit der Benutzergeräte bzw. ihrer sicheren Elemente zu verbessern sowie zu vereinfachen.

Gemäß einer Ausführungsform kann vorgesehen sein, dass zur Standorterkennung des sicheren Elements ein darin hinterlegter Hilfsprofildatensatz und/oder Hilfsidentifikationsdatensatz verwendet werden bzw. wird. Beim Hilfsprofildatensatz kann es sich um ein temporäres Benutzerprofil handeln. Der Hilfsidentifikationsdatensatz kann eine temporäre Profilidentifikation eines Hilfsprofildatensatzes umfassen bzw. als solche bereitgestellt werden, damit darauf basierend eine Netzwerkanmeldung erfolgen kann. Die Netzwerkanmeldung kann bei einem jeweils dafür vorgesehenen Netzwerk erfolgen, wie beispielsweise ein privates Netzwerk und/oder ein Telekommunikationsnetzwerk. Beim privaten Netzwerk kann es sich um ein Netzwerk eines Abnehmers bzw. Herstellers von sicheren Elementen und/oder Benutzergeräten handeln. Beim Telekommunikationsnetzwerk kann es sich um ein Netzwerk eines jeweiligen Netzwerkbetreibers handeln. Diese Netzwerke können eine eigene Netzwerkkennung bzw. Ortskennung besitzen. Nach der Anmeldung in einem solchen Netzwerk kann das sichere Element bzw. Benutzergerät Einrichtungsschritte durchführen, für die eine Netzwerkanmeldung erforderlich ist, wie beispielsweise die Standorterkennung. Dies kann abermals dabei helfen, Einsatzfähigkeit, Verfügbarkeit und/oder Datenintegrität, insbesondere Kommunikationsfähigkeit der Benutzergeräte bzw. ihrer sicheren Elemente zu verbessern sowie zu vereinfachen.

### Kurze Beschreibung der Figuren

Ausführungsbeispiele der Erfindung werden nachfolgend anhand schematischer Zeichnungen näher erläutert.

Dabei zeigen:
- Fig. 1: zeigt eine schematische Ansicht eines Ausführungsbeispiels einer erfindungsgemäßen Einrichtungsanordnung mit wenigstens einem Benutzergerät und wenigstens einem Servergerät, die zur Durchführung eines Verfahrens zur Einrichtung des wenigstens einen Benutzergerätes ausgestaltet sind.
- Fig. 2: zeigt eine schematische Ansicht eines weiteren Ausführungsbeispiels einer erfindungsgemäßen Einrichtungsanordnung mit wenigstens einem Benutzergerät und wenigstens einem Servergerät, die zur Durchführung eines Verfahrens zur Einrichtung des wenigstens einen Benutzergerätes ausgestaltet sind.

### Detaillierte Beschreibung beispielhafter Ausführungsformen

Die Darstellungen in der Figur sind schematisch und nicht maßstäblich. Werden in der folgenden Figurenbeschreibung in verschiedenen Figuren die gleichen Bezugszeichen verwendet, so bezeichnen diese in der Regel gleiche oder ähnliche Elemente. Gleiche oder ähnliche Elemente können aber auch durch unterschiedliche Bezugszeichen bezeichnet sein.

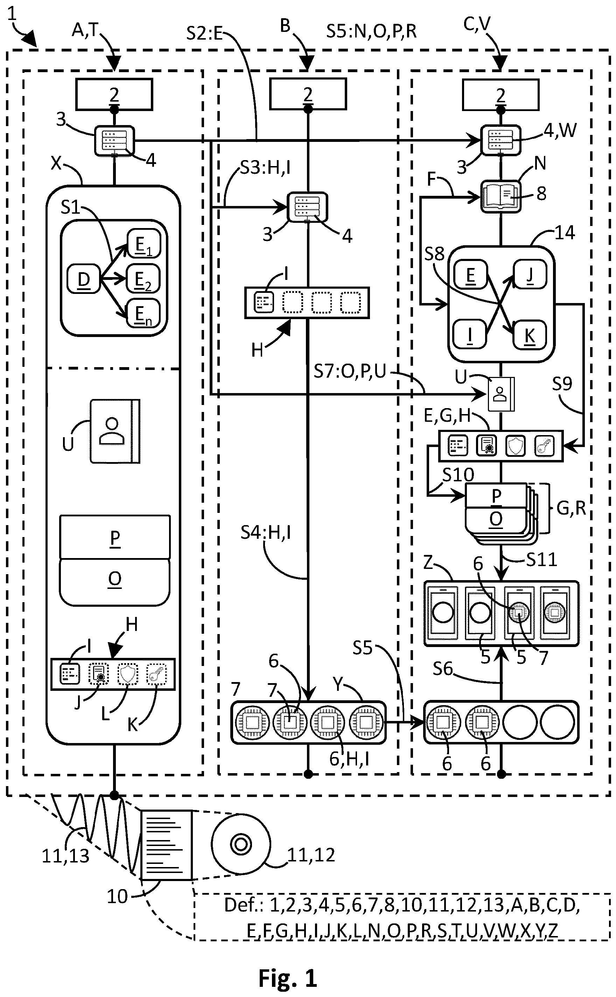

Fig. 1 zeigt eine schematische Darstellung einer Einrichtungsanordnung 1, die wenigstens eine Recheneinrichtung 2 umfasst, beispielsweise in Form eines Servergeräts 3, das von einer vertrauenswürdigen Instanz T gesteuert wird, die ein Hardware-Sicherheitsmodul 4 enthalten kann, das dazu ausgestaltet ist, um Datensätze zur Konfiguration eines weiteren Recheneinrichtung 2 zu speichern, zu verwalten und/oder bereitzustellen. Die weitere Recheneinrichtung 2 kann als Benutzergerät 5 eingerichtet sein, das in Form eines Internet of Things (IoT)-Gerätes, wie ein Multimediagerät, eine Kamera, ein Lautsprecher, ein Haushaltsgerät, ein Messgerät, eine Industrieanlage, ein Fahrzeug, ein Verkaufsautomat oder ähnliches, vorliegen kann, das mit einer Maschinenentität assoziiert sein soll, und/oder als Smartcard, Identifikationskarte, Transaktionskarte, persönliches mobiles Gerät, wie ein Smartphone, eine Smartwatch, usw., das einer Personenentität zuzuordnen ist. Das Servergerät 3 kann zum Beispiel in Form eines Servers für Subscription Manager Data Preparation + (SM-DP+) bereitgestellt werden.

Im vorliegenden Beispiel umfasst die Einrichtungsanordnung 1 und das entsprechende Verfahren eine Datenbereitstellungseinrichtung A, die als die vertrauenswürdige Instanz T dienen bzw. von dieser betrieben sein und Anmeldeinformationen H, Betriebssystemdatensätze O und/oder Profildatensätze P bereitstellen kann, eine Herstellungseinrichtung B, die die sicheren Elemente 6 herstellen kann, und eine Fertigungseinrichtung C, welche die Benutzergeräte 5 fertigen kann. Die Dateneinrichtung A, die Herstellungseinrichtung B und/oder die Fertigungseinrichtung C können je nach Wunsch oder Bedarf funktional und/oder räumlich kombiniert werden. Zwischen der Dateneinrichtung A, der Herstellungseinrichtung B und/oder Fertigungseinrichtung C können Datenverbindungen als Kommunikationsverbindungen F bzw. Funkverbindungen F aufgebaut sein.

Die Benutzergeräte 5 können für einen sicheren Betrieb, Transaktionen und/oder Kommunikation, z. B. über ein Telekommunikationsnetz (nicht gezeigt), mittels mindestens eines Profildatensatzes P für einen Benutzer bzw. Anwender eingerichtet sein, der in einem entsprechenden sicheren Element 6 oder manipulationssicheren Element (TRE), wie z. B. einer UICC, eUICC, iUICC, SIM, eSIM, iSIM, SE, eSE oder ähnlichem gespeichert ist, das in Form eines Computerchips bereitgestellt werden kann. Die Profildatensätze P werden auf der Grundlage entsprechender persönlicher Datensätze bzw. Benutzerdatensätze U generiert, die in Datendateien auf dem Servergerät 3, insbesondere dem Hardware-Sicherheitsmodul 4 der vertrauenswürdigen Instanz T, enthalten sind. Zum Speichern und Verwalten von Profildatensätzen P auf den sicheren Elementen 6 wird ein Betriebssystemdatensatz O auf dem sicheren Element 6 installiert, zum Beispiel in einem sicheren Speicherort 7, wie einer Issuer Security Domain - Root (ISD-R), die auf dem sicheren Element 6 vorgesehen ist. Der sichere Speicherort 7 kann verschiedene Speicherbereiche aufweisen.

In einer Datenbereitstellungsphase X können in der Dateneinrichtung A Betriebssystemdatensätze O und/oder Profildatensätze für die Benutzergeräte 5 auf Basis jeweiliger Personalisierungsdaten bzw. Benutzerdaten U beispielsweise im Servergerät 2 der sicheren Instanz T, insbesondere an dessen Hardware-Sicherheitsmodul 3, vorgehalten werden. In der Datenbereitstellungsphase X können diese Daten aktuell gehalten werden, um sie der Fertigungseinrichtung B und/oder der Herstellungseinrichtung C bei Bedarf in einer jeweiligen Herstellungsphase Y und/oder Fertigungsphase Z zur Einrichtung der Benutzergeräte 5 bzw. deren sicherer Elemente 6 Verfügung zu stellen. Alternativ oder zusätzlich können bzw. kann die Herstellungsphase Y und/oder die Fertigungsphase Z je nach Wunsch oder Bedarf in der Dateneinrichtung A angeordnet und/oder mit dieser kombiniert werden.

Es kann eine Verwaltungsanwendung 8 bzw. Heimatortsregister (*Home Location Register -* HLR) vorgesehen sein, die so konfiguriert werden kann, dass sie es einem Netzwerkanbieter N, wie einem Mobilnetzwerkbetreiber (*Mobile Network Operator -* MNO) ermöglicht, mit dem Benutzergerät 5, insbesondere dem sicheren Element 6, unter Nutzung des darin gespeicherten Benutzerprofils P zu kommunizieren bzw. sichere Kommunikationsverbindungen F aufzubauen, beispielsweise direkt und/oder über eine Kommunikationsschnittstelle (nicht gezeigt) zum Benutzergerät 5. Das Benutzerprofil P kann die Anmeldeinformationen H bzw. Sicherheitsnachweise, einschließlich Elementenidentifikatoren I, Profilidentifikatoren J, Sicherheitsschlüsseln K und/oder Authentifizierungszertifikaten L, umfassen. Die Sicherheitsnachweise H können alle Arten von Nachweisen umfassen, die z. B. von der GSMA o. ä. definiert wurden. Die Sicherheitsschlüssel K können alle Arten von kryptografischen Codes oder Schlüsselelementen umfassen, die für die Interaktion mit den Benutzergeräten 5, den sicheren Elementen 6, dem Servergerät 3 der vertrauenswürdigen Instanz T als Aussteller eines Teils des Betriebssystemdatensatzes O, der Verwaltungsanwendung 8 des Netzwerkbetreibers N und/oder einer Komponente davon geeignet sein können.

Bei den Authentifizierungszertifikaten L kann es sich beispielsweise um jede Art von elektronischem Zertifikat handeln, das von der vertrauenswürdigen Instanz T ausgestellt sein kann, um die Herkunft der Benutzergeräte 5, der sicheren Elemente 6, des sicheren Speicherorts 7, Verwaltungsanwendung 8 und/oder des Betriebssystemdatensatzes O zu authentifizieren. Für die Handhabung und/oder Übertragung des Betriebssystemdatensatzes O können Übertragungsleitungen (nicht dargestellt) vorgesehen werden, die jede Art von drahtgebundenen und/oder drahtlosen Übertragungsketten als Kommunikationsverbindungen F bzw. Funkverbindungen umfassen können, einschließlich des Internets (für Übertragungen "Over-The-Air") sowie andere physische und/oder nicht-physische Datenträger, die nach Wunsch und Bedarf der Einrichtungsanordnung 1 und seiner Komponenten konfiguriert und gesichert werden können. Ferner kann der Betriebssystemdatensatz O ausführbare Unterdatensätze beinhalten, die Anwendungsprozesse definieren und/oder für einen Zugriff auf Datenobjekte konfiguriert sein können. Installations- und/oder Aktualisierungsprozesse können in der Regel mithilfe eines Installationsdatensatzes, beispielsweise ein sicheres Installationsprogramm ausgeführt werden, das von der sicheren Instanz T ausgegeben sein kann. Der Installationsdatensatz kann als Teil des Betriebssystemdatensatzes O bereitgestellt sein.

In jeder der hier beschriebenen Ausführungsformen der Einrichtungsanordnung 1 können insbesondere die Rechengeräte 2 sowie das sichere Element 6 dazu ausgestaltet und eingerichtet sein, dass sie ein Computerprogramm in Form eines Einrichtungsprogramms 10 ausführen können. Das Einrichtungsprogramm 10 kann auf einem computerlesbaren Datenträger 11 gespeichert sein, der als computerlesbares Medium 12 und/oder als Datenträgersignal 13 ausgebildet sein kann. Bei der Ausführung des Einrichtungsprogramms 10 kommunizieren das Sicherheitssystem 1 und seine Komponenten wie im Einrichtungsprogramm 10 angegeben. Parameter, die dem Sicherheitssystem 1, seinen Komponenten und/oder den von ihm ausgeführten Schritten S zugeordnet sind und/oder zugrunde liegen, können in dem Einrichtungsprogramm 10 und/oder durch dieses definiert sein.

In einem ersten Schritt S1 kann von der Datenbereitstellungseinrichtung A in der Datenbereitstellungsphase X aus einem Hauptschlüssel D, wie beispielsweise einem Hauptbetreiberschlüssel (*Master OP*), wenigstens eine Ortsbetreiberschlüssel E abgeleitet werden, der einem Standort V der Verwaltungsanordnung 8 zugeordnet sein kann. Der Standort V kann eine entsprechende Ortskennung W besitzen, wie beispielsweise einen mobilen Ländercode (*mobile country code -* MCC) und/oder mobilen Netzwerkcode (*mobile network code -* MNC). Es kann eine Vielzahl oder Reihe von Ortsbetreiberschlüssel E₁ bis Eₙ bereitgestellt werden, von denen jeder einem entsprechenden Standort V mit einer entsprechenden Ortskennung W zuweisbar sein kann.

In einem zweiten Schritt S2 kann der Ortsbetreiberschlüssel E derjenigen Fertigungseinrichtung C zur Verfügung gestellt werden, die sich an dem Standort V befindet, für den der Ortsbetreiberschlüssel W vorgesehen ist. Unabhängig davon können, möglicherweise auf Basis zu diesem Zeitpunkt schon vorhandener Benutzerdaten U, in einem dritten Schritt S3 die Anmeldeinformationen H von der Datenbereitstellungseinrichtung A in der Datenbereitstellungsphase X zumindest so weit bereitgestellt werden, dass ein Elementenidentifikator I für herzustellende sichere Elemente 6 zur Verfügung steht. Dieser dritte Schritt S3 kann zeitlich vor, nach und/oder parallel zum ersten Schritt S1 durchgeführt werden. Im vorliegenden Beispiel werden die rudimentären Anmeldeinformationen H, beispielsweise der Elementenidentifikator I, der Herstellungseinrichtung B zur Verfügung gestellt, wobei eine entsprechende Datenübertragung unter Nutzung der Servergeräte 3 bzw. Hardware-Sicherheitsmodule 4 der Datenbereitstellungseinrichtung A und/oder der Herstellungseinrichtung B vollzogen werden kann.

In einem vierten Schritt S4 können von der Herstellungseinrichtung B in der Herstellungsphase Y die sicheren Elemente 6 mit den rudimentären Anmeldeinformationen H, wie beispielsweise dem Elementenidentifikator I versehen werden. In einem fünften Schritt S5 können die in den rudimentären Anmeldungsformationen H versehenen sicheren Elemente 6 der Fertigungseinrichtung C zur Verfügung gestellt werden. In einem sechsten Schritt S6 können in der Fertigungseinrichtung C in der Fertigungsphase Z die Benutzergeräte 5 mit den sicheren Elementen 6 versehen werden.

In einem siebenten Schritt S7 können der Fertigungseinrichtung C die Benutzerdaten U, Betriebssystemdatensätze O und/oder Profildatensätze P bereitgestellt werden, wobei eine entsprechende Datenübertragung unter Nutzung der Servergeräte 3 bzw. Hardware-Sicherheitsmodule 4 der Datenbereitstellungseinrichtung A und/oder der Fertigungseinrichtung C vollzogen werden kann. In einem achten Schritt S8 können ein Profilidentifikator J und/oder ein Sicherheitsschlüssel K für ein Benutzerprofil P und/oder Betriebssystemdatensatz O aus dem Ortsbetreiberschlüssel E und einem jeweiligen Elementenidentifikator I der der Fertigungsstufe Z bereitstehenden bzw. in ein Benutzergerät 5 verbauten sicheren Elemente 6 abgeleitet werden. Dazu kann eine Kommunikationsverbindung F zu Verwaltungsanwendung 8 aufgebaut werden.

Der Ableitungsschritt kann mithilfe eines Anwendungsprogramms 14 vollzogen werden, das von der sicheren Instanz T der Fertigungseinrichtung C zur Verfügung gestellt werden kann, beispielsweise im Rahmen des zweiten Schrittes S2. Mit der Ableitung eines Profilidentifikators J und/oder einen Sicherheitsschlüssels K für ein Benutzerprofil P und/oder Betriebssystemdatensatz O können verbleibende Anmeldeinformationen H her- bzw. bereitgestellt sein, damit ein kompletter Registrierungsdatensatz G, beispielsweise *OPc* gemäß GSM Standard, als Teil der nunmehr kompletten Anmeldeinformationen H, des jeweiligen Profildatensatzes P und/oder Betriebsdatensatzes O zur Verfügung gestellt werden kann, der zur Anmeldung bei der Verwaltungseinrichtung 8 durch das Benutzergerät 5 dienen kann. Beim Authentisierungsalgorithmus R kann es sich beispielsweise um einen Milenage / TUAK Algo-Code handeln, welcher in demjenigen Speicherbereich 7 abgelegt sein und von dort ausgeführt werden kann.

In einem neunten Schritt S9 kann der Satz kompletter Anmeldeinformationen H bzw. eine entsprechende Registrierungsdatensatz G bereitgestellt werden. In einem zehnten Schritt S10 können auf Basis der Anmeldeinformationen H bzw. des Registrierungsdatensatzes G ein jeweiliger Betriebssystemdatensatz O und/oder Profildatensatz P zusammen- bzw. bereitgestellt werden. In einem elften Schritt S11 können Betriebssystemdatensatz O und/oder Profildatensatz P bzw. Anmeldeinformationen H und/oder Registrierungsdatensatz G auf das jeweils dafür vorgesehene sichere Element 6 geladen werden. Die entsprechenden Daten können im sicheren Speicherort 7 des sicheren Elementes 6 installiert werden. Nunmehr steht das Benutzergerät 5 mit dem sicheren Element 6 zur Anwendung bereit. So sind darauf sämtliche zur Nutzung eines Telekommunikationsnetzwerkes notwendigen Anmeldeinformationen H als Registrierungsdatensatz G vorhanden, die bzw. der insbesondere Ortsbetreiberschlüssel E, Elementenidentifikator I, Profilidentifikator J, Sicherungsschlüssel K und/oder Zertifikat L umfassen kann.

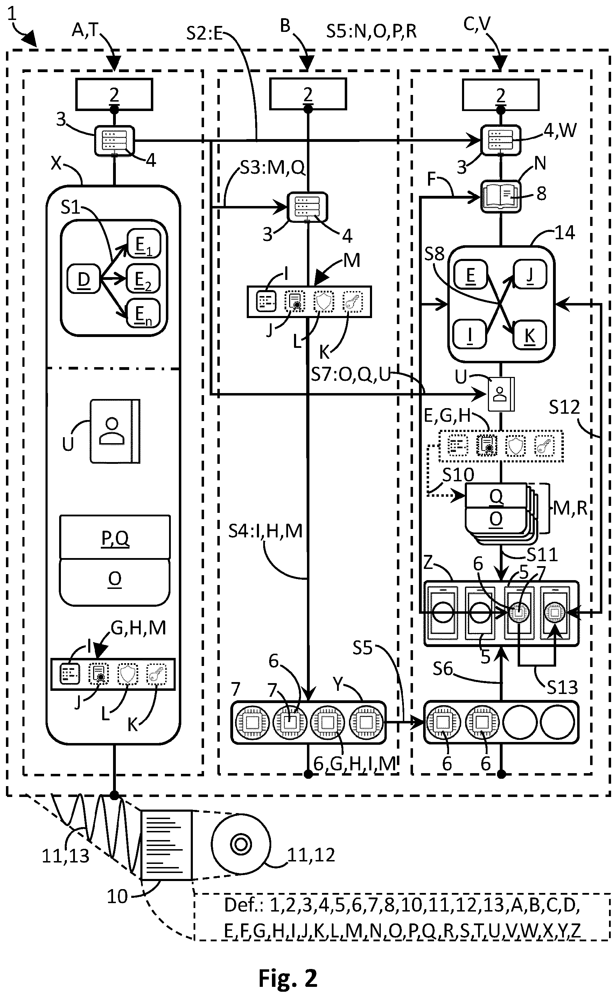

Fig. 2 zeigt eine schematische Ansicht eines Ausführungsbeispiels einer erfindungsgemäßen Einrichtungsanordnung 1 mit wenigstens einem Benutzergerät 5 und wenigstens einem Servergerät 3, die zur Durchführung eines Verfahrens zur Einrichtung des wenigstens einen Benutzergerätes 5 ausgestaltet sind. Der Effizienz und Kürze halber wird im Folgenden lediglich die Unterschiede zwischen dem in Fig. 1 beschriebenen Ausführungsbeispiel und dem in Fig. 2 beschriebenen Ausführungsbeispiel eingegangen. So werden gemäß in Fig. 2 gezeigten Ausführungsbeispiel Hilfsprofildatensätze Q und/oder Hilfsanmeldeinformationen M von der sicheren Instanz bereitgestellt T.

Die Hilfsprofildatensätze Q können bereits sämtliche zur Anmeldung bei einem Netzwerkbetreiber N notwendigen Anmeldeinformationen H bzw. jeweiligen Registrierungsdatensatz G in Form von entsprechenden Hilfsanmeldeinformationen M beinhalten. Die Hilfsprofildatensätze Q können Profildatensätze P simulieren. Entsprechend können Sie zumindest teilweise auf fiktiven bzw. behelfsmäßigen Benutzerdaten U beruhen. Als solche können die Hilfsanmeldeinformationen bereits im dritten Schritt S3 der Herstellungseinrichtung B zur Verfügung gestellt werden. Diese kann die Hilfsanmeldeinformationen M im Rahmen der Erstellungsphase Y im vierten Schritt S4 auf die sicheren Elemente 6 Laden und diese samt Hilfsanmeldeinformationen M im fünften Schritt S5 der Fertigungseinrichtung C zur Verfügung stellen.

In der Fertigungseinrichtung C kann nunmehr auf den zehnten Schritt S10 quasi verzichtet werden, indem entweder Hilfsprofildatensätze Q im elften Schritt S11 vorgefertigt für die Fertigungsphase Z auf die sicheren Elemente 6 geladen werden oder diese schon darauf geladen sind, beispielsweise, indem sie von der Herstellungseinrichtung B in der Herstellungsphase Y auf den sicheren Elementen 6 installiert werden. In einem zwölften Schritt S12 können die sicheren Elemente S12 über eine Kommunikationsverbindung F ihren Standort V und/oder eine entsprechende Ortskennung W abfragen und daraus selbst und/oder mit dem Anwendungsprogramm 14 zusammenwirkend einen eigentlichen Ortsbetreiberschlüssel E erzeugen.

In einem dreizehnten Schritt S13 können dann die Benutzergeräte 5 bzw. deren sicheren Elemente 6 die zuvor vorhandenen Hilfsanmeldeinformationen M durch einen eigentlichen gemäß Benutzerdaten U vorgesehenen Registrierungsdatensatz G mit entsprechenden vollständigen bzw. endgültigen Anmeldeinformationen H ersetzen. Hierbei kann also die Standorterkennung per Anmeldung beim Netzwerkbetreiber N erfolgen. Während es sich bei diesem Netzwerkbetreiber N um eine öffentliche Netzwerkbetreiber handeln kann, können insbesondere im in Fig. 1 gezeigten Ausführungsbeispiel alternativ oder zusätzlich ein privater Netzwerkbetreiber genutzt werden.

Während des oben beschriebenen Verfahrens kann der sichere Speicherort 7 bzw. dessen Speicherbereiche den jeweiligen Anforderungen genutzt werden, um darin Datensätze oder Datenobjekte abzulegen. So können im sicheren Speicherort 7 insbesondere die Anmeldeinformationen H, der Betriebssystemdatensatz O, der Profildatensatz P und/oder dazugehörige Authentisierungsalgorithmen R möglichst unveränderbar und/oder unverlierbar abgelegt sein, beispielsweise indem der sichere Speicherort zumindest teilweise als nur lesbarer Speicher (*readonly-memory -* ROM) ausgeführt ist. Die jeweilige Servervorrichtung 3 kann beliebige Datenkomponenten des Konfigurationssystems 1, einschließlich des Betriebssystemdatensatzes O, möglicherweise zusammen mit einem Installationsprogrammdatensatz, der jeweiligen diversifizierten Daten, wie den Sicherheitsnachweisen H und/oder dem Benutzerprofil P, die dem Benutzer U zugeordnet sind, der der Verwaltungsanwendung 8 und/oder dem sicheren Element 6 des Benutzergeräts 5, beispielsweise über die Kommunikationsschnittstelle 9 bereitstellen, um sie zur Anwendung durch den Netzwerkbetreiber N bzw. an dem sicheren Speicherort 7 zur Anwendung durch den Benutzer U zu speichern

### Bezugszeichen

- 1: Einrichtungsanordnung
- 2: Recheneinrichtung
- 3: Servergerät /Rechengerät
- 4: Hardware-Sicherheitsmodul / HSM
- 5: Benutzergerät /Rechengerät
- 6: sicheres Element / eUICC
- 7: sicherer Speicherort
- 8: Verwaltungsanwendung /Heimatortsregister
- 9: Kommunikationsschnittstelle
- 10: Einrichtungs- Computerprogramm
- 11: computerlesbarer Datenträger
- 12: computerlesbares Medium
- 13: Datenträgersignal
- 14: Anwendungsprogramm
- A: Datenbereitstellungseinrichtung
- B: Herstellungseinrichtung
- C: Fertigungseinrichtung
- D: Hauptschlüssel
- E: Ortbetreiberschlüssel
- F: Kommunikationsverbindung / Funkverbindung
- G: Registrierungsdatensatz
- H: Anmeldeinformation / Sicherheitsnachweis / -referenz
- I: Elementenidentifikator
- J: Profilidentifikator
- K: Sicherheitsschlüssel
- L: Zertifikat
- M: Hilfsanmeldeinformationen
- N: Netzwerkbetreiber/ Mobilnetzanbieter
- O: Betriebssystemdatensatz
- P: Profildatensatz
- Q: Hilfsprofildatensatz
- R: Authentisierungsalgorithmus
- S: Schritt
- T: sicheren Instanz
- U: Benutzerdaten / Anwenderdaten
- V: Standort
- W: Ortskennung
- X: Datenbereitstellungsphase
- Y: Herstellungsphase
- Z: Fertigungsphase
- S1: Ableitung Ortsbetreiberschlüssel
- S2: Bereitstellung Ortsbetreiberschlüssel
- S3: Bereitstellung rudimentäre Anmeldeinformationen
- S4: Installieren Anmeldeinformationen
- S5: Bereitstellung sichere Elemente
- S6: Fertigung Benutzergeräte
- S7: Bereitstellung Benutzerdaten
- S8: Ableitung verbleibende Anmeldeinformationen
- S9: Bereitstellung Anmelde- und/oder Registrierungsinformationen
- S10: Bereitstellung Datensätze
- S11: Installation Datensätze
- S12: behelfsmäßigen Anmeldung
- S13: Erzeugung Anmeldeinformationen

## Patentansprüche

1. Verfahren zum Einrichten eines Benutzergerätes (5), beispielsweise eines mobilen Benutzergerätes (5) zur Teilnahme in einem Telekommunikationsnetzwerk, mit einem sicheren Element (6), insbesondere einer eUICC, das dazu ausgestaltet ist, wenigstens einen Profildatensatz (P) für einen sicheren Betrieb des Benutzergerätes (5) zu verwalten, umfassend folgende Schritte:
- Bereitstellen eines Elementenidentifikators (I) zum Identifizieren des sicheren Elements (6);
- Bereitstellen einer Ortskennung (W) für ein Heimatsortsregister (R) eines Telekommunikationsnetzwerks; und
- Ableiten wenigstens einer Anmeldeinformation (H) zum Anmelden des Benutzergerätes (5) aus dem Elementenidentifikator (I) und der Ortskennung (W) und/oder einem der Ortskennung (W) zugeordneten Ortsbetreiberschlüssel (E).

2. Verfahren nach Anspruch 1, **dadurch gekennzeichnet, dass** die wenigstens eine Anmeldeinformation einen Profilidentifikator (J) und/oder einen Sicherheitsschlüssel (K) umfasst.

3. Verfahren nach Anspruch 1 oder 2, **dadurch gekennzeichnet, dass** der Elementenidentifikator (I) und/oder der Ortsbetreiberschlüssel (E) von einer sicheren Instanz (T) bezogen werden bzw. wird.

4. Verfahren nach wenigstens einem der oben genannten Ansprüche, **dadurch gekennzeichnet, dass** der Ortsbetreiberschlüssel (E) von einem Hauptschlüssel (D) abgeleitet wird.

5. Verfahren nach wenigstens einem der oben genannten Ansprüche, **dadurch gekennzeichnet, dass** es des Weiteren einen Schritt des Erkennens eines Standortes (V) des sicheren Elements (6) für die Bereitstellung der Ortskennung (W) und/oder des Ortsbetreiberschlüssels umfasst.

6. Verfahren nach wenigstens einem der oben genannten Ansprüche, **dadurch gekennzeichnet, dass** zur Standorterkennung des sicheren Elements (6) ein darin hinterlegter Hilfsprofildatensatz (Q) und/oder Hilfsidentifikationsdatensatz (M) verwendet werden bzw. wird.

7. Einrichtungsprogramm (10), **gekennzeichnet durch** Befehle, die bei der Ausführung des Einrichtungsprogramms (10) durch eine Rechenvorrichtung (2) diese dazu veranlassen, ein Verfahren nach einem der Ansprüche 1 bis 6 auszuführen.

8. Computerlesbarer Datenträger (11), **gekennzeichnet durch** ein darauf gespeichertes Einrichtungsprogramm (10) nach Anspruch 7.

9. Benutzergerät (5), insbesondere mobiles Endgerät zur Teilnahme in einem Kommunikationsnetzwerk, **gekennzeichnet durch** ein darauf gespeichertes Einrichtungsprogramm (10) nach Anspruch 7, einen computerlesbaren Datenträger (11) nach Anspruch 8 und/oder **dadurch, dass** das Benutzergerät (5) zur Ausführung eines Verfahrens nach wenigstens einem der Ansprüche 1 bis 6 eingerichtet ist.

10. Einrichtungsanordnung (1) zum Einrichten von Benutzergeräten (5), **gekennzeichnet durch** ein darin gespeichertes Einrichtungsprogramm (10) nach Anspruch 7, einen computerlesbaren Datenträger (11) nach Anspruch 8 und/oder **dadurch, dass** die Einrichtungsanordnung (1) zur Ausführung eines Verfahrens nach wenigstens einem der Ansprüche 1 bis 6 eingerichtet ist.
